# EUROPÄISCHE PATENTSCHRIFT

(11) **EP 0 562 481 B1**
(45) Veröffentlichungstag und Bekanntmachung des Hinweises auf die Patenterteilung: **31.05.1995**
(21) Anmeldenummer: 93104535.5
(22) Anmeldetag: 19.03.1993
(51) Int. Cl.: B62B 3/06

(54) **Gabelhubwagen**
Fork lift truck
Chariot élévateur à fourche

(30) Priorität: 26.03.1992 DE 4209860
(43) Veröffentlichungstag der Anmeldung: 29.09.1993
(73) Patentinhaber: Linde Aktiengesellschaft, 65189 Wiesbaden (DE)
(72) Erfinder: Moineau, Eric, F-33200 Bordeaux-Cauerdan (FR)
(74) Vertreter: Schaefer, Gerhard, Dr.

(56) Entgegenhaltungen:
- DE-C- 951 036
- GB-A- 738 961
- US-A- 1 992 150

## Beschreibung

Die Erfindung betrifft einen Gabelhubwagen mit einem Antriebsteil und einem anhebbaren Lastteil, wobei der Lastteil mit dem Antriebsteil durch ein Gelenkparallelogramm verbunden ist und benachbart zum Antriebsteil eine zur Fahrzeuglängsachse senkrechte Stirnwand aufweist, die einer dazu parallelen, an einer Wandung des Antriebsteils in dessen oberen Bereich gebildeten Kante gegenüberliegt. Derartige Gabelhubwagen werden auch als Niederhubwagen bezeichnet und sind beispielsweise als Elektro-Deichsel-Hubwagen ausgebildet. Es gibt dabei Geräte, bei denen die Batterie auf dem Antriebsteil untergebracht ist und eine auf dem Lastteil angebrachte Stirnwand als Begrenzung des Laderaums in Richtung zum Antriebsteil dient.

Bei anderen Geräten, die häufiger sind, ist die Stirnwand des Lastteils als Element einer Batterieaufnahmevorrichtung ausgebildet. Bei solchen Geräten wird also die Batterie auf dem Lastteil mit transportiert und auch mit angehoben, wenn eine Last angehoben wird. Das Antriebsteil weist zumeist ein Gehäuse auf, in dem das Antriebsaggregat und der Hubmechanismus untergebracht sind. Das Gehäuse ist in der Regel mit einem oberen Abschlußdeckel versehen. Am Übergang zwischen dem Abschlußdeckel und der Rückwand des Gehäuses (dabei handelt es sich um eine deichselferne Wand), die der Stirnwand des Lastteils gegenüberliegt, ist dabei eine Kante gebildet. Diese Kante kann auch abgerundet sein.

Zwischen der Kante und der Stirnwand des Lastteils ist in der Regel ein enger Spalt vorhanden. Beim Anheben des Lastteils vergrößert sich dieser Spalt zunächst, da sich aufgrund des Gelenkparallelogramms die Stirnwand des Lastteils längs eines Kreisbogens bewegt und sich daher etwas vom Antriebsteil entfernt. Je nach konstruktiver Auslegung des Gelenkparallelogramms kann sich der Spalt gegen Ende der Hubbewegung auch wieder verringern. Dieser Spalt ist zumindest beim Anheben und Absenken vorhanden. Sofern die Bedienperson aus Unachtsamkeit die Finger bei der Hub- oder Senkbewegung in den Spalt hält, kommt es zu Klemm- oder Quetschverletzungen oder gar zum Abscheren der Finger.

Der vorliegenden Erfindung liegt die Aufgabe zugrunde, einen Gabelhubwagen der eingangs genannten Art zur Verfügung zu stellen, der sicherheitstechnisch verbessert ist.

Diese Aufgabe wird erfindungsgemäß dadurch gelöst, daß die Stirnwand des Lastteils, im Schnitt parallel zur Fahrzeuglängsachse gesehen, im Bereich der Kante des Antriebsteils zum Antriebsteil hin derart konvex gekrümmt ist, daß beim Anheben und Absenken des Lastteils ein im wesentlichen gleichbleibender Abstand zwischen der Kante des Antriebsteils und der Stirnwand des Lastteils erhalten bleibt. Die Abstandsveränderung zwischen der Stirnwand des Lastteil und der Rückwand des antriebsteilseitigen Gehäuses wird im sicherheitstechnisch gefährlichen Bereich der Kante durch die Formgebung der Stirnwand kompensiert. Somit entfällt an dieser Stelle jegliche Verletzungsgefahr für die Bedienperson. Sofern der Spalt zwischen der Stirnwand des Lastteils und der Rückwand des Antriebsteils von vornherein (also bei vollständig abgesenktem Lastteil) so klein ist, daß der zur Verfügrung stehende Raum nicht für ein versehentliches Hineinlangen mit den Fingern ausreicht, ist eine größtmögliche Sicherheit gegeben.

In vorteilhafter Weiterbildung des Erfindungsgegenstands wird vorgeschlagen, daß die konvexe Krümmung einem Kreisbogenabschnitt entspricht, dessen Radius gleich ist dem Radius des Kreisbogenabschnitts, auf dem sich jeweils die beweglichen Enden des Gelenkparallelogramms bewegen. Dadurch wird ein gleichbleibender Abstand zwischen der Kante und der Stirnwand in jedem Betriebszustand erreicht.

Besonders zweckmäßig ist die Erfindung dann bei einem Gabelhubwagen, der batterie-elektrisch betrieben ist und bei dem die Stirnwand des Lastteils an einer Batterieaufnahmevorrichtung gebildet ist. Das Absenken des Lasttteils, das bei hydraulisch angetriebenem Hubmechanismus durch Öffnen eines Ventils bewirkt wird, erfolgt bei einem derartigen Gabelhubwagen durch das Gewicht der Batterie auch bei leeren Gabeln sehr rasch und mit großer Kraft, so daß es gerade hier wichtig ist, die eingangs beschriebenen Gefährdung zu vermeiden.

Weitere Vorteile und Einzelheiten der Erfindung werden anhand des in den Figuren schematisch dargestellten Ausführungsbeispieles näher erläutert. Dabei zeigt:
- Figur 1: eine Seitenansicht eines Gabelhubwagens,
- Figur 2: die Draufsicht auf den Gabelhubwagen nach Figur 1,
- Figur 3: eine Darstellung des Gelenkparallelogramms, und der erfindungsgemäßen Ausbildung des Gabelhubwagens bei vollständig abgesenktem Lastteil,
- Figur 4: eine Darstellung gemäß Figur 3 bei in Mittelstellung angehobenem Lastteil,
- Figur 5: eine Darstellung gemaß Figur 3 bei vollständig angehobenem Lastteil.

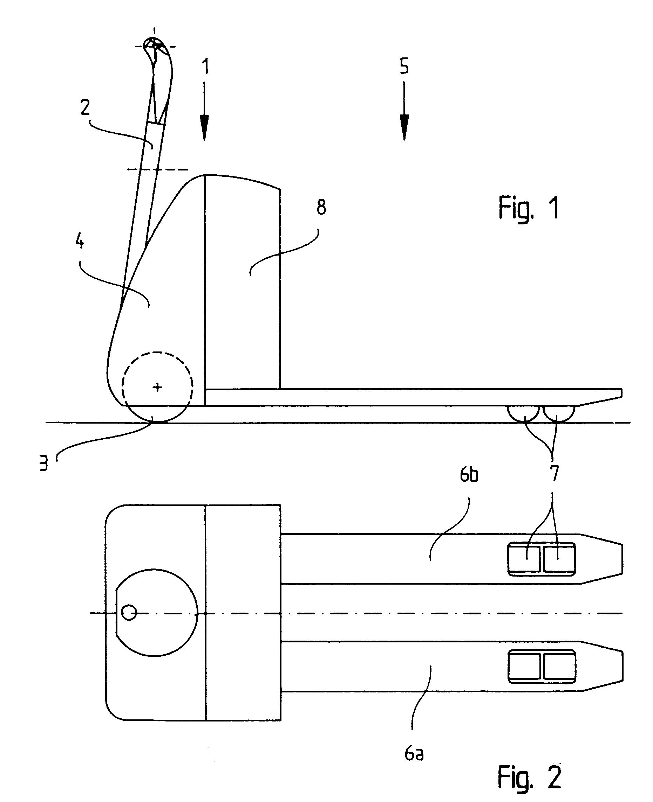

Der erfindungsgemäße Gabelhubwagen ist in diesem Ausführungsbeispiel als Elektro-Deichsel-Hubwagen ausgebildet und weist ein Antriebsteil 1 mit Deichsel 2, Antriebsrad 3 und einem das Antriebsaggregat beinhaltenden Gehäuse 4 auf. Mit dem Antriebsteil 1 verbunden ist auf in den Figuren 1 und 2 nicht gezeigte Weise der Lastteil 5, der zwei Gabel 6a und 6b mit daran befestigten Tandem-Lastrollen 7 aufweist. Unmittelbar benachbart dem Antriebsteil 1 ist eine Batterieaufnahmevorrichtung 8 auf dem Lastteil 5 angeordnet.

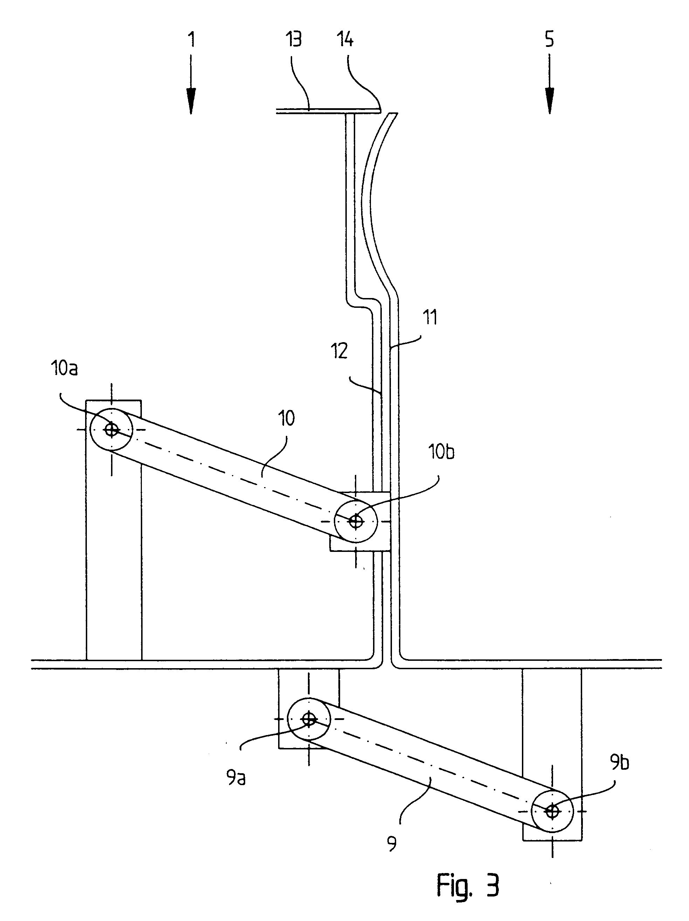

Figur 3 zeigt eine Prinzipdarstellung der Verbindung zwischen dem Antriebsteil 1 und dem Lastteil 5. Hierfür ist ein Gelenkparallelogramm vorgsehen, das zwei parellele Hebel 9 und 10 aufweist, die jeweils mit dem einen Ende an einem Gelenkpunkt 9a bzw. 10a des Antriebsteils 1 verbunden sind und mit dem anderen Ende an einem Gelenkpunkt 9b bzw. 10b des Lasttteils 5. Die Hubvorrichtung ist nicht dargestellt.

Die Figur zeigt den Lastteil 5 in vollständig abgesenktem Zustand. Dabei ist zwischen einer dem Antriebsteil 1 benachbarten, an der Batterieaufnahmevorrichtung 8 gebildeten Stirnwand 11 und einer dazu parallelen, an dem Gehäuse 4 gebildeten Rückwand 12 ein Abstand vorgesehen, der so klein ist, daß die Bedienperson im Normalfall die Finger nicht hineinbekommt. Je nach konstruktiver Auslegung ist es auch möglich, daß die Stirnwand 11 direkt an der Rückwand 12 anliegt. Auf der Rückwand 12 liegt ein das Gehäuse 4 nach oben abschließender Abschlußdeckel 13 auf. Das in der Figur rechte Ende des Abschlußdeckels 13 bildet eine Kante 14. Falls kein Abschlußdeckel vorhanden ist, wird die Kante 14 vom oberen Ende der Rückwand 12 gebildet. Bei herkömmlichen Gabelhubwagen besteht die Gefahr, daß zwischen der Kante 14 und der Stirnwand 11 beim Anheben oder Absenken des Lastteils 5, bei dem zwischen der Stirnwand 11 und der der Kante 14 bzw. der Rückwand 12 ein Spalt mit veränderlicher Spaltweite entsteht, die Finger der Bedienperson verletzt werden, falls diese sich in Richtung zur Last hin über das Antriebsteil 1 hinweg nach vorne beugt und sich dabei mit der Hand derart abstützt (z.B. auf dem Abschlußdeckel 13), daß die Finger unbeabsichtigt in den Spalt ragen.

Zur Vermeidung dieser Gefahr ist erfindungsgemäß die Stirnwand 11 im Bereich unterhalb der Kante 14 konvex in Richtung zur Rückwand 12 gekrümmt. Die Rückwand 12 ist deshalb in diesem Bereich dementsprechend etwas zurückgesetzt. Der Abstand zwischen dem Abschlußdeckel 13 und dem oberen Ende der Stirnwand 11 entspricht dem Abstand zwischen den unteren Enden von Stirnwand 11 und Rückwand 12.

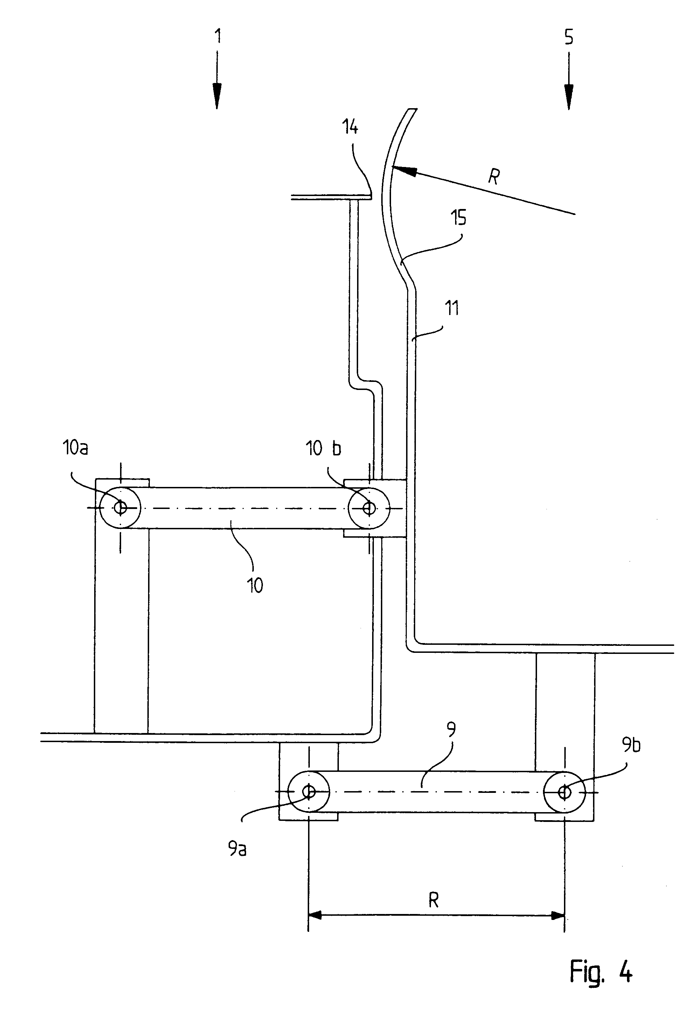

Figur 4 zeigt die Anordnung gemäß Figur 3 bei in Mittelstellung angehobenem Lastteil 5. Durch die konvexe Krümmung der Stirnwand 11 bleibt der Abstand zwischen der Kante 14 und der Stirnwand 11 beim Anheben und Absenken stets gleich. Dies ist insbesondere dann der Fall wenn die konvexe Krümmung die Form eines Kreisbogenabschnitts 15 aufweist, dessen Radius R gleich ist dem Radius der Kreisbogenabschnitte auf dem sich jeweils die beweglichen Enden des Gelenkparallelogramms bewegen, d.h. gleich ist dem Abstand zwischen den Gelenkpunkten 9a und 9b des Hebels 9 bzw. dem Abstand zwischen den Gelenkpunkten 10a und 10b des Hebels 10.

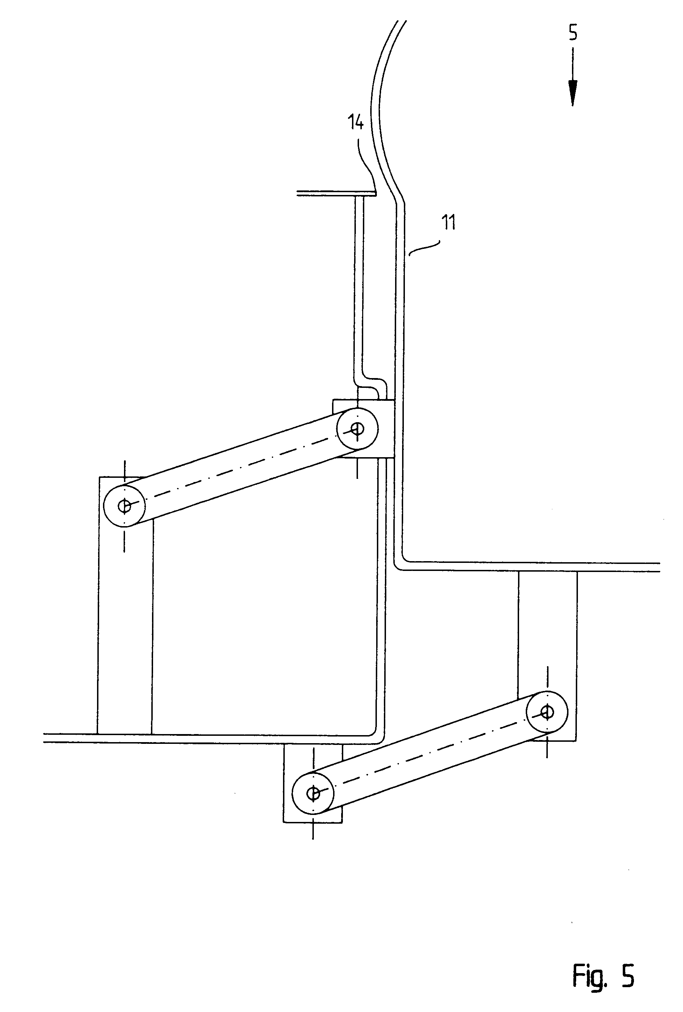

Figur 5 zeigt die Anordnung gemäß Figur 3 bei vollständig angehobenem Lastteil 5. Auch in dieser Stellung ist der Abstand zwischen der Kante 14 und der Stirnwand 11 gleichgeblieben. Der Spalt ist deher nach wie vor so klein, daß keine Finger hineingebracht werden können.

## Patentansprüche

1. Gabelhubwagen mit einem Antriebsteil (1) und einem anhebbaren Lastteil (5), wobei der Lastteil mit dem Antriebsteil durch ein Gelenkparallelogramm (9,10) verbunden ist und benachbart zum Antriebsteil eine zur Fahrzeuglängsachse senkrechte Stirnwand (11) aufweist, die einer dazu parallelen, an einer Wandung des Antriebsteils in dessen oberen Bereich gebildeten Kante (14) gegenüberliegt, **dadurch gekennzeichnet**, daß die Stirnwand (11) des Lastteils (5), im Schnitt parallel zur Fahrzeuglängsachse gesehen, im Bereich der Kante (14) des Antriebsteils (1) zum Antriebsteil (1) hin derart konvex gekrümmt ist, daß beim Anheben und Absenken des Lastteils (5) ein im wesentlichen gleichbleibender Abstand zwischen der Kante (14) des Antriebsteils (1) und der Stirnwand (11) des Lastteils (1) erhalten bleibt.

2. Gabelhubwagen nach Anspruch 1, dadurch gekennzeichnet, daß die konvexe Krümmung einem Kreisbogenabschnitt (15) entspricht, dessen Radius (R) gleich ist dem Radius (R) des Kreisbogenabschnitts, auf dem sich jeweils die beweglichen Enden (9b,10b) des Gelenkparallelogramms bewegen.

3. Gabelhubwagen nach Anspruch 1 oder 2, dadurch gekennzeichnet, daß der Gabelhubwagen batterie-elektrisch betrieben ist und die Stirnwand (11) des Lastteils (5) an einer auf dem Lastteil (5) angeordneten Batterieaufnahmevorrichtung (8) gebildet ist.

## Claims

1. Fork-lift truck with a driving part (1) and a raisable load part (5), wherein the load part is connected to the driving part by an articulated parallelogram (9, 10) and adjacent to the driving part exhibits a front wall (11) which is perpendicular to the longitudinal axis of the vehicle and lies opposite an edge (14) parallel with it and formed on a wall of the driving part in its upper area, characterised in that the front wall (11) of the load part (5), viewed in the section parallel with the longitudinal axis of the vehicle, is curved convexly towards the driving part (1) in the area of the edge (14) of the driving part (1) so that when the load part (5) is raised and lowered, an essentially constant gap is maintained between the edge (14) of the driving part (1) and the front wall (11) of the load part (1).

2. Fork-lift truck according to claim 1, characterised in that the convex curvature corresponds to a portion (15) of an arc of a circle the radius (R) of which is equal to the radius (R) of the portion of the arc of the circle on which the moving ends (9b, 10b) of the articulated parallelogram move respectively.

3. Fork-lift truck according to claim 1 or 2, characterised in that the fork-lift truck is operated by electric battery and the front wall (11) of the load part (5) is formed on a battery housing device (8) disposed on the load part (5).

## Revendications

1. Chariot élévateur à fourche comportant une partie motrice (1) et une partie de charge (5) relevable, la partie de charge étant reliée à la partie motrice par un parallélogramme articulé (9, 10) et, au voisinage de la partie motrice, il est prévu une paroi frontale (11) verticale par rapport à l'axe longitudinal du véhicule, cette paroi frontale étant en regard d'un bord (14) parallèle, formé dans la Partie supérieure de la paroi de la partie motrice, chariot caractérisé en ce que la paroi frontale (11) de la partie de charge (5) présente, coupée parallèlement à l'axe longitudinal du véhicule, au niveau du bord (14) de la partie motrice (1), une courbure convexe en direction de la partie motrice (1) de façon que, lors du soulèvement et de l'abaissement de la partie de charge (5), il subsiste un intervalle essentiellement constant entre le bord (14) de la partie motrice (1) et la paroi frontale (11) de la partie de charge (5).

2. Chariot élévateur à fourche selon la revendication 1, caractérisé en ce que la courbure convexe correspond à un arc de cercle (15) dont le rayon (R) est égal au rayon (R) de l'arc de cercle correspondant au lieu géométrique des extrémités mobiles (9b, 10b) du parallélogramme articulé).

3. Chariot élévateur à fourche selon la revendication 1 ou 2, caractérisé en ce que le chariot est à entraînement électrique alimenté par batteries, et la paroi frontale (11) de la partie de charge (5) est formée sur un dispositif (8) logeant les batteries sur la partie de charge (5).
